# EUROPEAN PATENT SPECIFICATION

(11) **EP 3 913 884 B1**
(45) Date of publication and mention of the grant of the patent: **21.10.2026**
(21) Application number: 21157341.5
(22) Date of filing: 16.02.2021
(51) Int. Cl.: H04L 9/40, G06F 21/55, G06F 21/60, G06F 21/62, G06N 3/02, H04L 9/00

(54) **METHOD AND SYSTEM FOR PRIVACY PRESERVING CLASSIFICATION OF WEBSITES URL**
VERFAHREN UND SYSTEM ZUR DATENSCHÜTZENDEN KLASSIFIZIERUNG DER URL VON WEBSITES
PROCÉDÉ ET SYSTÈME DE CLASSIFICATION D'URL DE SITES WEB PRÉSERVANT LA CONFIDENTIALITÉ

(30) Priority: 21.05.2020 IN 202021021474
(43) Date of publication of application: 24.11.2021
(73) Proprietor: Tata Consultancy Services Limited, Maharashtra (IN)
(72) Inventor: Emmadi, Nitesh, 500081 Hyderabad, Telangana (IN); Narumanchi, Harika, 600113 Chennai, Tamil Nadu (IN); Shaik, Imtiyazuddin, 500081 Hyderabad, Telangana (IN); Alasingara Bhattachar, Rajan Mindigal, 560009 Bangalore, Karnataka (IN); Tupsamudre, Harshal, 411013 Pune, Maharashtra (IN)
(74) Representative: Goddar, Heinz J.

(56) References cited:
- CHOU EDWARD J ET AL: "Privacy-Preserving Phishing Web Page Classification Via Fully Homomorphic Encryption", ICASSP 2020 - 2020 IEEE INTERNATIONAL CONFERENCE ON ACOUSTICS, SPEECH AND SIGNAL PROCESSING (ICASSP), IEEE, 4 May 2020 (2020-05-04), pages 2792 - 2796, XP033793383, DOI: 10.1109/ICASSP40776.2020.9053729
- HUNG LE ET AL: "URLNet: Learning a URL Representation with Deep Learning for Malicious URL Detection", ARXIV.ORG, CORNELL UNIVERSITY LIBRARY, 201 OLIN LIBRARY CORNELL UNIVERSITY ITHACA, NY 14853, 9 February 2018 (2018-02-09), XP081222928
- TUPSAMUDRE HARSHAL ET AL: "Everything Is in the Name - A URL Based Approach for Phishing Detection", 19 May 2019, ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 231 - 248, ISBN: 978-3-319-10403-4, XP047510721

## Description

### TECHNICAL FIELD

### CROSS-REFERENCE TO RELATED APPLICATIONS AND PRIORITY

The present application claims priority from Indian patent application no. 202021021474, filed on May 21, 2020.

The embodiments herein generally relate to the field of malicious Uniform Resource Locator (URL) detection. More particularly, but not specifically, the present disclosure provides a method and system for privacy preserving classification of websites URL using deep neural network or logical regression or hybrid of both based on fully homomorphic encryption.

### BACKGROUND

Now a days, browsing malicious websites or phishing are one of the prominent attacks causing loss of billions of dollars every year. Malicious URLs can be sent to users via e-mails, text or pop up messages and they can host malicious content in the form of viruses, Trojans and attack scripts. Attackers use this to obtain sensitive information from users, install malware and obtain control over their systems. Therefore, it is crucial to detect them in a timely manner.

Having seen the devastating effects of malicious websites, there are tools for their detection such as safe browsing. Safe browsing is a mechanism used by web browsers to alert general users who are engaged in browsing activity on malicious websites. Prominent web browsers provide safe browsing capability to the end-users. Safe browsing classifies malicious websites into two categories namely phishing and malicious. However, these tools are being misused by tracking the users browsing data making it a serious privacy concern for the users. Although safe browsing attempts to protect the user privacy to some extent using k-anonymity and differential privacy, there are results that show that there are issues with these safe browsing methods in terms of privacy. Further, in few cases web browsers counter phishing attack by using blacklisting method. Blacklisting is one of the most effective methods to classify URLs, however it fails to detect newly generated malicious websites.

In recent times, machine learning has also been explored. Machine learning is a promising field often being used in wide range of applications that we come across in daily life such as virtual assistants, product recommendations in online marketing websites and also in all industry verticals such as aviation, healthcare, retail and telecom, banking and financial services. Machine learning based URL classification techniques with trained models on server side have emerged as one of the solution to detect new malicious URLs. While malicious URL detection continues to be a problem, another potential concern is the user privacy. The document "PRIVACY-PRESERVING PHISHING WEB PAGE CLASSIFICATION VIA FULLY HOMOMORPHIC ENCRYPTION", discloses a fast and lightweight homomorphic-encryption pipeline that enables privacy-preserving machine learning for phishing web page recognition. The visual features of the web page are used to train an accurate model and an inference pipeline is implemented with practical runtime and communication costs. To do so, a variety of techniques are deployed that cover deep learning and optical character recognition are implemented to extract salient visual features, and optimize the inner mechanisms of state-of-the-art homomorphic encryption schemes to reduce the encryption-related costs. Another document "URLNet: Learning a URL Representation with Deep Learning for Malicious URL Detection", discloses about URLNet, an end-to-end deep learning framework to learn a nonlinear URL embedding for Malicious URL Detection directly from the URL. Convolutional Neural Networks are applied to both characters and words of the URL String to learn the URL embedding in a jointly optimized framework. This approach allows the model to capture several types of semantic information. Also, advanced word-embeddings are used to solve the problem of too many rare words observed in this task. Another document "Everything Is in the Name - A URL Based Approach for Phishing Detection", discloses that, although a classifier trained on traditional bag-of-words features works well in many cases, it fails to recognize a very prevalent class of phishing URLs that combines a popular brand with one or more words among others. To overcome these flaws, various alternative feature extraction techniques based on word segmentation and n-grams are explored. A phishy list of popular words that are highly indicative of phishing attacks are also constructed and used. The efficacy of each of these feature sets is verified by training a logistic regression classifier on a large dataset of URLs.

### SUMMARY

The following presents a simplified summary of some embodiments of the disclosure to provide a basic understanding of the embodiments. This summary is not an extensive overview of the embodiments. It is not intended to identify key/critical elements of the embodiments or to delineate the scope of the embodiments. It's sole purpose is to present some embodiments in a simplified form as a prelude to the more detailed description that is presented below.

In view of the foregoing, an embodiment herein provides a system for classifying a website URL as defined in claim 5.

In another aspect, the embodiment here provides a method for classifying a website URL as defined in claim 1.

In another aspect the embodiment here provides one or more non-transitory machine readable information storage mediums comprising one or more instructions which when executed by one or more hardware processors cause classifying a website URL as defined in claim 6.

It should be appreciated by those skilled in the art that any block diagram herein represents conceptual views of illustrative systems embodying the principles of the present subject matter. Similarly, it will be appreciated that any flow charts, flow diagrams, state transition diagrams, pseudo code, and the like represent various processes which may be substantially represented in a computer-readable medium and so executed by a computing device or processor, whether or not such computing device or processor is explicitly shown.

### BRIEF DESCRIPTION OF THE DRAWINGS

The accompanying drawings, which are incorporated in and constitute a part of this disclosure, illustrate exemplary embodiments and, together with the description, serve to explain the disclosed principles.
FIG. 1 shows a block diagram of a system for classifying a website URL according to an embodiment of the present disclosure.
FIG. 2 shows a schematic of deep neural network (DNN) based client machine - server architecture for privacy preserving malicious URL detection according to an embodiment of the disclosure.
FIG. 3 shows a schematic of logistic regression based client machine - server architecture for privacy preserving malicious URL detection according to an embodiment of the disclosure.
FIG. 4 illustrates neuron computation in fully homomorphic encryption (FHE) setting according to an embodiment of the present disclosure.
FIGS. 5A-5B show a flowchart illustrating the steps involved in classifying a website URL according to an embodiment of the present disclosure.
FIG. 6 shows a flowchart illustrating steps involved in DNN based client machine - server architecture for privacy preserving malicious URL detection according to an embodiment of the present disclosure.
FIG. 7 shows a flowchart illustrating steps involved in logistic regression based client machine - server architecture for privacy preserving malicious URL detection according to an embodiment of the disclosure.
FIG. 8 shows graphical representation of logistic regression model accuracies with Sigmoid and its different approximations according to an embodiment of the disclosure.
FIG. 9 shows graphical representation of Training times for n-grams of size 1, 2 and 3 performed on plaintext data according to an embodiment of the disclosure.

### DETAILED DESCRIPTION

Exemplary embodiments are described regarding the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

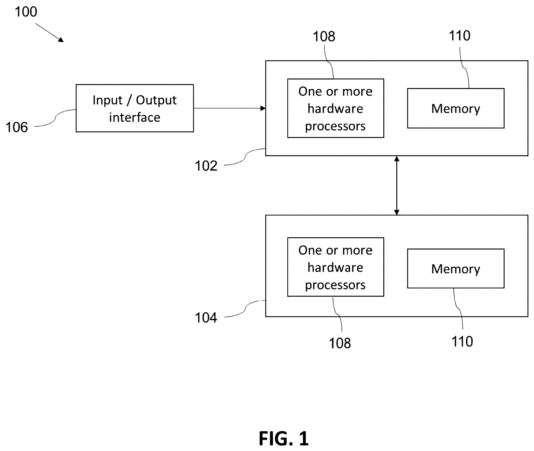

Referring now to the drawings, and more particularly to FIG. 1 through FIG. 9, where similar reference characters denote corresponding features consistently throughout the figures, there are shown preferred embodiments and these embodiments are described in the context of the following exemplary system and/or method.

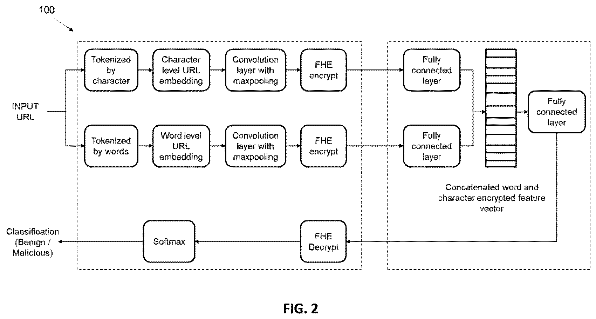

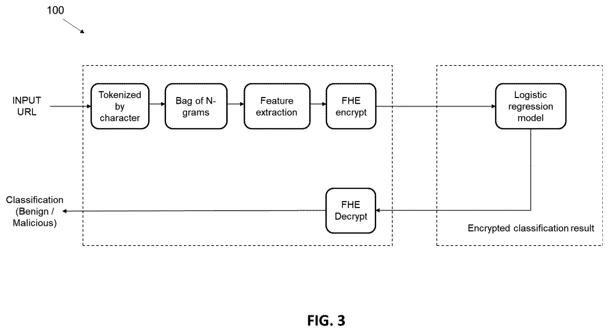

According to an embodiment of the disclosure, a system 100 for classifying a website URL is shown in the block diagram of FIG 1. The system 100 is configured to achieve end-to-end privacy for machine learning based malicious URL detection. The system 100 provides privacy preserving malicious URL detection models based on Fully Homomorphic Encryption (FHE) approach using at least one of a deep neural network (DNN) based technique as shown in schematic of FIG. 2, logistic regression based technique as shown in schematic of FIG. 3 or a hybrid of the DNN based technique and the LR based technique. The system 100 is utilizing a split architecture (client-server) where-in feature extraction is done by a client machine 102 and classification is done by a server 104. The client machine 102 encrypts the query using FHE and sends it to the server 104 which hosts machine learning model. During this process, the server 104 doesn't learn any information about the query. Considering the performance limitations of FHE method, the system 100 is configured to provide solution wherein only the model-dependent part of the query processing is performed on the server 104 in encrypted domain. This architecture mitigates privacy challenges in safe browsing approach. The client machine 102 generates public and private key pairs. The client machine 102 shares public key to the server 104 and keeps the private key secret. All encryptions are performed using client's public key and decryptions are performed at client side using its private key.

According to an embodiment of the disclosure, the system 100 is implemented on the client machine 102 and the server 104. The client machine 102 and the server 104 are in communication with each other. The system 100 further comprises an input module 106, one or more hardware processors 108 and a memory 110 in communication with the one or more hardware processors 108 as shown in the block diagram of FIG. 1. The one or more hardware processors 108 work in communication with the memory 110. The one or more hardware processors 108 are configured to execute a plurality of algorithms stored in the memory 110. The memory 110 further includes a plurality of modules for performing various functions.

According to an embodiment of the disclosure, the input module 106 (Input / Output interface) is configured to providing the website URL as an input URL to the client machine 102. The input URL is kept at a predefined character length. The input module 106 is accessible to the user via smartphones, laptop or desktop configuration thus giving the user the freedom to interact with the system 100 from anywhere anytime. The input module 106 may include a variety of software and hardware interfaces, for example, interfaces for peripheral device(s), such as a keyboard, a mouse, an external memory, a camera device, and a printer. The input module 106 can facilitate multiple communications within a wide variety of networks and protocol types, including wired networks, for example, local area network (LAN), cable, etc., and wireless networks, such as Wireless LAN (WLAN), cellular, or satellite.

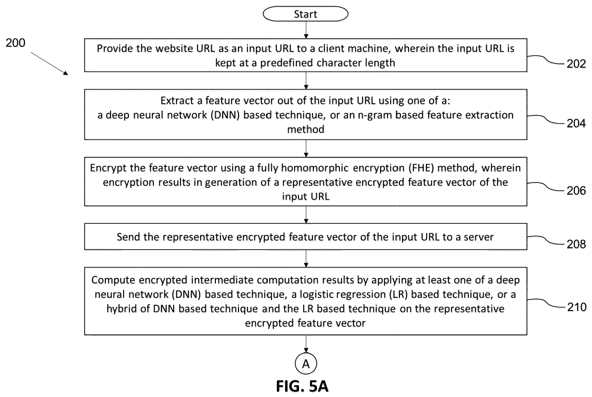

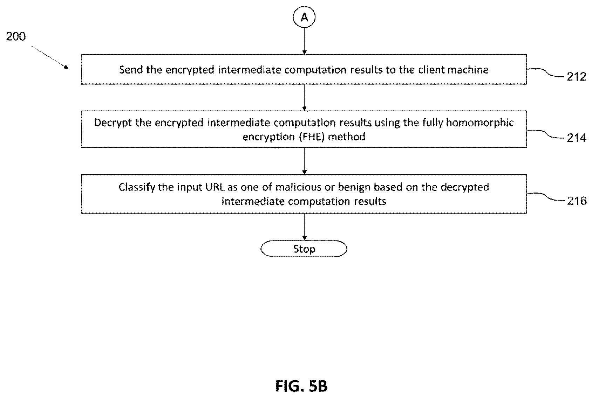

According to an embodiment of the disclosure, the memory 110 configured to perform various steps as shown in the flowchart 200 of FIG. 5A-5B. Initially at step 202, the website URL is provided as an input URL to the client machine 102, wherein the input URL is kept at a predefined character length. At step 204, a feature vector is extracted out of the input URL using one of a deep neural network (DNN) based technique, or an n-gram based feature extraction method.

At step 206, the feature vector is encrypted using a fully homomorphic encryption (FHE) method, wherein encryption results in generation of a representative encrypted feature vector of the input URL. Further at step 208, the representative encrypted feature vector of the input URL is sent to the server 104. At step 210, the encrypted intermediate computation results are computed by applying at least one of a deep neural network (DNN) based technique, a logistic regression (LR) based technique, or a hybrid of the DNN based technique and the LR based technique on the representative encrypted feature vector.

At step 212, the encrypted intermediate computation results are sent to the client machine 102. At step 214, the encrypted intermediate computation results are decrypted using the fully homomorphic encryption (FHE) method. And finally at step 224, the input URL is classified as one of malicious or benign based on the decrypted intermediate computation results.

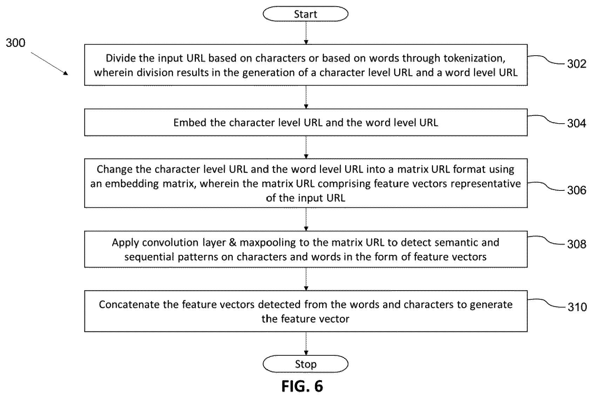

According to an embodiment of the disclosure, a flowchart 300 shows steps involved in DNN based client machine - server architecture for privacy preserving malicious URL detection is shown in FIG. 6. At next step 302, the input URL is divided based on characters or based on words through tokenization, wherein the division results in the generation of a character level URL and a word level URL. At step 304, the character level URL and the word level URL are embedded. Further at step 306, the character level URL and the word level URL are changed into a matrix URL format using an embedding matrix. The matrix URL comprising feature vectors representative of the input URL. The client machine 102 generates a public and private key pairs. The private key is kept secret by the client machine 102 and the public key is shared publicly. The server 104 can have weights encrypted or unencrypted. The client machine 102 generates public and private key pairs. The client machine 102 shares public key to the server 104 and keeps the private key secret. All encryptions are performed using client's public key and decryptions are performed at client side using its private key.

At next step 308, the convolution layer & maxpooling is applied to the matrix URL to detect semantic and sequential patterns on characters and words in the form of feature vectors, wherein max pooling is s a sample-based discretization process. And finally at step 310, the feature vectors detected from the words and characters are concatenated to generate a resultant feature vector. This resultant vector can further be used for the classification of the website URL as explained in the earlier part of the disclosure.

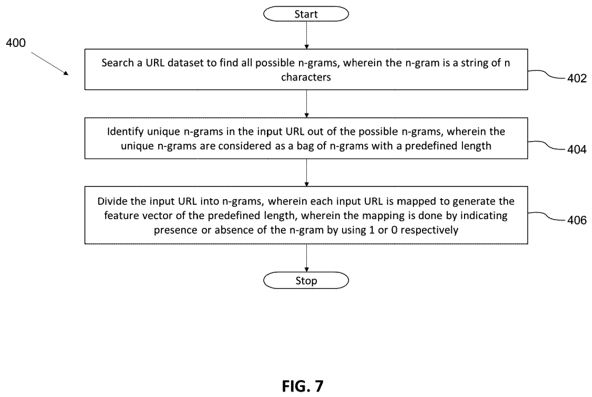

According to an embodiment of the disclosure, a flowchart 400 shows steps involved in logistic regression based client machine - server architecture for privacy preserving malicious URL detection is shown in FIG. 7. Initially at step 402, a URL dataset is searched to find all possible n-grams, wherein the n-gram is a string of n characters. At step 404, the unique n-grams are identified in the input URL out of the possible n-grams. The unique n-grams are considered as a bag of n-grams with a predefined length. And finally at step 406, the input URL is divided into n-grams, wherein each input URL is mapped to generate the feature vector of the predefined length, wherein the mapping is done by indicating presence or absence of the n-gram by using 1 or 0 respectively. Further, the generated feature vector is used to classify the website URL.

According to an embodiment of the disclosure, the FHE method, DNN based technique and the logical reasoning based technique have been described in detail as follows.

The FHE method enables computations on encrypted data without the need for decryption. Given a set of ciphertexts C₁, ... Cₙ for plaintext messages m₁.... mₙ respectively encrypted with a key, one can evaluate an arbitrary function say f(m₁.... mₙ) without compromising privacy of plaintext messages. A public key FHE method *ξ* can be described as follows in equation (1) $ξ : \left({Keygen}_{ξ}, {Enc}_{ξ}, {Dec}_{ξ}, {Eval}_{ξ}\right)$ (1) where *Keygen_{ξ}, Enc_{ξ}, Dec_{ξ},* denote the key generation, encryption and decryption functions of ξ respectively and are identical to that of the usual public key encryption schemes. Eval_{ξ} is the evaluation algorithm used for computations on encrypted data. This algorithm takes as input a polynomial expression P and a set of ciphertexts c = { C₀, C₁, ... Cₙ} which are needed to compute P.
The input output of Eval_{ξ} satisfies following equation (2): ${Dec}_{ξ} \left({Eval}_{ξ}\left(P, c, pk\right),sk\right) = P \left({Dec}_{ξ}\left(c, sk\right)\right)$ (2) In the above expression pk denotes public key and sk denotes private key.

The FHE method in general supports two primitive operations, addition and multiplication. For addition, the polynomial expression, P (X, Y ) = X + Y adds two ciphertexts C₁ and C₂ that results in addition of corresponding plaintexts as shown in equation (3). ${Dec}_{ξ} \left({Eval}_{ξ}\left(P, {C}_{1}, {C}_{2}\right)\right) \begin{matrix}= {Dec}_{ξ} \left(P\left({C}_{1}, {C}_{2}\right)\right) \\ = {Dec}_{ξ} \left({C}_{1}\right) * {Dec}_{ξ} \left({C}_{2}\right)\end{matrix}$ (3)

Similarly, for multiplication, the polynomial expression, P(X; Y ) = X * Y multiplies two ciphertexts C₁ and C₂ that results in product of corresponding plaintexts as shown in equation (4). ${Dec}_{ξ} \left({Eval}_{ξ}\left(P, {C}_{1}, {C}_{2}\right)\right) \begin{matrix}= {Dec}_{ξ} \left(P\left({C}_{1}, {C}_{2}\right)\right) \\ = {Dec}_{ξ} \left({C}_{1}\right) * {Dec}_{ξ} \left({C}_{2}\right)\end{matrix}$ (4)

The two primitive operations, addition and multiplication, can be used to realize any arbitrary computation on ciphertexts.

According to an embodiment of the disclosure, the system 100 is utilizing deep neural network based on FHE for preserving privacy. Machine learning provides the ability for a computer to learn a task without explicit programming. Deep neural networks are a set of algorithms that can be used to achieve this task.

FHE based DNN is used to provide end to end privacy to the users. Unlike DNN in plaintext, here only training is performed in plaintext whereas prediction is performed on FHE data. This network is made up of several layers with each layer consisting number of neurons, neuron being the building block. A neuron in this setup takes all the inputs such as feature vector *E(xᵢ)*, encrypted using FHE, weights *wᵢ* and bias vector b which server learned during training phase, and gives the output by applying the transfer function that returns an encrypted output as given in equation (5): ${\sum }_{i = 1}^{n} {ω}_{i} ∗ E \left({x}_{i}\right) + b$ (5)

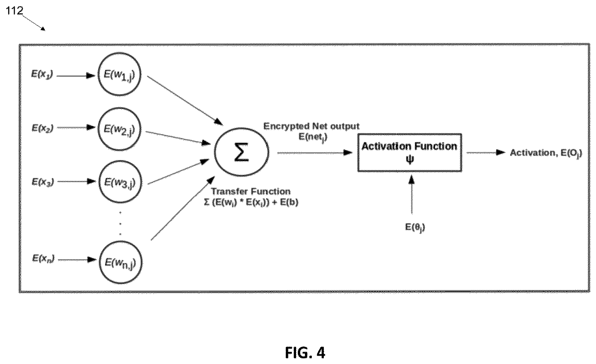

This encrypted output is sent to an activation function to get an activation output. The activation function brings non-linearity in the output of a neuron by deciding whether to fire a neuron or not based on the weighted sum and added bias term. Non-linearity makes the neural network capable of learning and perform complex operations. Prominent examples of activation functions include Sigmoid, Tanh, ReLU, leaky ReLU and Softmax. FIG. 4 illustrates neuron computation in FHE setting. FIG. 2 describes DNN based classification using FHE.

The encrypted activation output is the output of the neuron. These neurons are arranged in layers which are collection of neurons operating together to perform a prediction or classification task. The neurons can be arranged in different ways which form different types of neural networks such as feed forward network, fully connected neural network, convolution network, Radial bias function neural network and so on. In a fully connected layer, every neuron is connected to every other neuron of the next layer which are used to learn the categorization. The convolution layer was used to learn features from data. This layer has a set of filters which are of dimension *n* _{*} *n* applied on an input matrix to get a convolved output. For example, convolution filters applied on the input URL can detect semantic and sequential patterns on characters and words in URL. In an embodiment of the present disclosure, a fully connected neural network is used for classification of an encrypted input URL as malicious or not.

According to an embodiment of the present disclosure, malicious URL can be detected using DNN based on FHE as shown in schematic of FIG. 2. In an example of the disclosure, CNN based model URLnet has been used due to its advanced detection capabilities and efficiency. The privacy preserving machine learning model for malicious URL detection based on FHE is broadly classified into encoding component that changes the input URL u into a matrix format and inference component deals with the classification of URL as malicious or benign. FIG. 2 depicts client machine - server architecture for privacy preserving malicious URL detection. To get optimal performance using FHE the encoding part is done on client side (as this is model independent) and inference part is performed on server side (as this is model dependent). Encoding can be performed using at least one of the following
- only character-based CNN
- only word-based CNN
- character and word CNN
- character level word CNN
- character and character level word CNN
Out of these character and character level word CNN gives optimal performance.

According to an embodiment of the disclosure, the encoding component can be explained as follows. Initially, URL sequence length is taken at a predefined character length. In an example, the predefined character length is decided as 200 characters. So the characters above the predefined character length are truncated. In case of lesser length, characters are padded with < PAD > to make it to the predefined character length.

In character level CNN, the URL is tokenized into characters {u₁ ... uₙ} and each character is assigned a character ID {*cidₙ* ......... *cidₙ*}. A character level embedding matrix *cematrix* is represented as a sequence of 32 dimension vectors randomly initialized for all characters for each unique character in the URL. Embedding matrix is updated based on each training phase. Based on the updated character embedding matrix, this URL is represented as a character level URL matrix *cmatrix.*

In word level CNN, the URL is also passed to word level CNN and tokenized into words {*w*₁ ... ... ... ... . *wₙ*}. Each occurrence of unique words in the training is represented as a 32 dimension vector. These words are represented as word level URL representation.

In character level word CNN, the representation is obtained by element wise addition of word level representation obtained using word embedding matrix and word IDs and *wcmatrix.* To obtain *wcmatrix,* each word out of L unique words in the URL is represented as a sequence of character IDs to get a matrix with a sequence of words in character ID format. Each row in this matrix is replaced by an entry in character embedding matrix to get L matrices of dimension URL size 32. By sum pooling these matrices over L a word level representation of URL is obtained.

The outputs of embedding layers are 1024 dimension feature vector. These are encrypted by the client machine 102 to get {*E*(*cw*₁) .......... *E*(*cwₙ*)} which are given as input to the server 104. These encrypted vectors are homo-morphically batched to improve the performance of the network.

According to an embodiment of the disclosure, the inference component is described as follows: On receiving encrypted feature vector from the client machine, the server 104 passes these encrypted input through a fully connected network to give two 512 dimension feature vectors. These feature vectors are concatenated to form 1024 dimension feature vector. The server 104 then passes this through a fully connected network. Fully connected layer consists of four layers which convert input of 1024 feature vector, into 512, 256, 128 and 2 respectively. The first three layers use ReLU activation function and the output is sent to the client machine 102 which then decrypts and uses Softmax to get the classification results.

According to an embodiment of the disclosure, URLnet uses ReLU in the fully connected layers and Softmax in the final output layer. ReLU is chosen to add non linearity in the network to perform robust prediction. ReLU function is as follows in equation (6): $ReLU \left(x\right) = max \left(0, x\right)$ (6) Let *y*₁ ... ... ... . . *yₙ* be the n real numbers the Softmax function normalizes these into a probability distribution having n probabilities as follows in equation (7): $\frac{{e}^{{y}_{i}}}{{\sum }_{i = 1}^{n} {e}^{{y}_{i}}}$ (7)

These activation functions are computed on encrypted data and usually have more multiplicative depth. Therefore, approximation version of activation function ReLU was used to get optimal performance. ReLU approximation polynomial is computed using the points Xᵢ, ReLU(Xᵢ) where Xᵢ are randomly picked from a standard normal distribution. The ReLU approximation polynomial of degree 5 is as follows: $0.1488 + 0.4993 X + 0.3007 {X}^{2} - 0.0003 {X}^{3} - 0.0168 {X}^{4}$ The ReLU approximation polynomial of degree 4 is as follows: $1.1500 + 0.5012 X + 0.2981 {X}^{2} - 0.0004 {X}^{3} - 0.0388 {X}^{4}$

The approximation ReLU 2 is comparatively inexpensive than approximation ReLU 1 but has significantly low accuracy (52.87%) than approximation ReLU 1 (93.49%). Hence, approximate ReLU 1 was considered for better accuracy.

According to another embodiment of the disclosure, for privacy enabled malicious URL detection can also be done using logistic regression based on FHE techniques as shown in schematic of FIG. 3. Logistic regression is widely used machine learning algorithm for classification. In this model, feature extraction technique is based on n-grams. In n-grams based feature extraction, URL is split into tokens based on special characters and converted into bag of n-grams.

FIG. 3 shows the architecture for logistic regression based URL classifier using FHE. Here the feature extraction using bag of n-grams is done by the client machine 102 and the encrypted feature vector is sent to the server 104, which preserves privacy of user's input. The server 104 does encrypted classification using logistic regression based on FHE and gives encrypted classification result to the client machine 102, who decrypts the result to see whether the URL is malicious or benign. Since feature extraction is done using n-grams based approach, higher n value will give more number of features. Considering computational limitations of FHE, it was found that tri-grams are more practical and efficient in FHE setting. Each element in the bag of tri-grams represents a feature vector. These feature vectors are given as input to the server 102 for classification. In an example, logistic regression uses sigmoid function to compute the gradient. Thus, in the n-grams technique, the URL string is split using special characters and then extract tri-grams from each resulting token. This feature set is referred as bag-of-ngrams (BoN). Again, distinction is made between n-grams appearing in the different parts of the URL. For instance, the BoN features of the URL paypalhelpservice.simdif.com are name = {pay, ayp, ypa, pal, hel, elp, ..., dif} and tld = {com}.

According to yet another embodiment of the disclosure, the malicious URL detection can also be done utilizing a hybrid approach. The hybrid approach was done wherein the feature extraction is done using the embedding matrices and convolution layers from the URLNet architecture and these rich features are then used to train a logistic regression based classifier. This helps to mitigate the tradeoffs of both the techniques to provide an efficient privacy preserving malicious URL classifier. This hybrid model gives the performance of logistic regression model with the accuracy of a DNN. It should be appreciated that, the use of the bag of n-grams approach for the feature extraction and use of the DNN based approach classification is well within the scope of this disclosure.

According to an embodiment of the disclosure, the system 100 can also be explained with the help of following example. The experimentation results show that malicious URLs can be detected while protecting user privacy with a reasonable accuracy and efficiency and also highlight trade-offs between computation requirement and accuracy.

Experiments were run using (i) Logistic Regression (ii) URLNet and (iii) Hybrid model, coupled with FHE implemented using HEAAN library. The experiments were run on a system that has Intel Xeon Gold CPU clocked at 2.4 Ghz, 64 GB RAM and run on 40 cores. Training was performed using PhishTank and valid URL dataset DMOZ. For this purpose the parameters were set to get at least 80 bits of security. For FHE operations HEAAN library was used which implements CKKS scheme. HEAAN library was chosen as it supports floating point numbers and negative numbers even while packing data which makes it suitable for machine learning applications.

**Training:** Model was trained on plaintext data using a dataset of 100,000 URLs divided into 80,000 URLs for training and 20,000 for testing. Traning time for 80,000 URLs dataset for model based on (i) URLNet is 45 minutes (ii) logistic regression is 2 hours (iii) Hybrid is 3 hours.

DNN: Each feature vector is encrypted as a single ciphertext. Degree 5 and 4 approximation of ReLU function was used. It was observed that DNN implemented using degree 5 approximation outperforms DNN implemented using degree 4 approximation as shown in TABLE 4. Experiments in Table 4 uses embedded matrix and convolution layers for feature extraction and logistic regression for classification. While the DNN based classifier gives better accuracy, it is computationally expensive. Client side computation overhead is given in TABLE 1 and server side computation overhead is given in TABLE 3. It was observed that DNN based implementations have higher computational requirements.

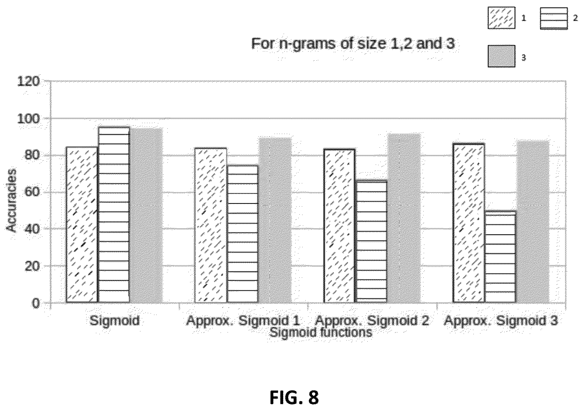

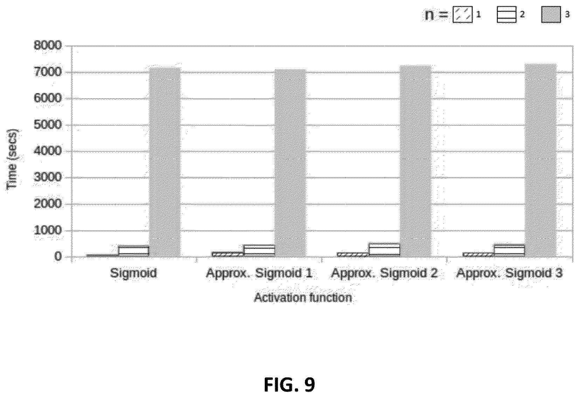

Logistic Regression: Experiments were run for logistic regression based on FHE on DMOZ dataset. It was observed that, accuracy of the prediction based on LR which uses built-in sigmoid function (python library) is high followed by that of approximated sigmoid function2 as shown in TABLE 4. FIG. 8 and FIG. 9 summarizes the results for different feature extraction using n-grams for n = 1; 2; 3. Here it was observed that higher the n-grams, higher will be the accuracy of the prediction and also higher will be the computation time.

Hybrid: The accuracy of hybrid approach is given in TABLE 4. TABLES 1 and 3 show that hybrid approach gives less overhead both at client and server side without compromising the accuracy. The ciphertext size is less compared to DNN because DNN requires larger parameter set to accommodate more computations. It mitigates the tradeoffs of less accuracy of logistics regression based approach by taking features from URLnet and reduces computational requirements of DNN by relying on logistic regression model for classification. The server stores at least 512 ciphertexts, one each per neuron output as indicated by * in TABLE 1 for DNN.

**TABLE 1: Client side computation overhead**

| Method | # of features | Ciphertext size (KB) | Features encryption times (ms) | Decryption times (ms) |
|---|---|---|---|---|
| DNN | 2k | 372.7* | 11.2 | 6.2 |
| LR | 5k | 458.7 | 18.4 | 8.9 |
| Hybrid | 2k | 229.4 | 8.94 | 3.74 |

**TABLE 2: Approximation Polynomials for Sigmoid**

| Approximation | Polynomial | Method |
|---|---|---|
| 1 | 0.5 + 0..25x - 0.0208*x³* + 0.00208*x⁵* | Taylor series in [-8, 8] |
| 2 | 0.5 + 0.15x - 0.0015*x³* | Least square approximation |
| 3 | 0.5 + 0.253551*x* - 0.00148*x²* - 0.02587*x³ +*0.00158*x⁴* + 0.00371*x⁵* | Lagranges interpolation in [-7, 7] |

**TABLE 3: Server side computation overhead**

| Method | Approximation | Accuracy (%) | Time (sec) | Memory Usage (Gb) |
|---|---|---|---|---|
| DNN | Approximation ReLU1 | 93.49 | 56 | 5.7 |
| LR | Approximation Sigmoid 2 | 91.43 | 1 | 0.13 |
| Hybrid | Approximation Sigmoid 3 | 93.03 | 0.8 | 0.03 |

**TABLE 4: Results for three malicious URL detection classifiers**

| DNN | | Logistic regression | | Hybrid | |
|---|---|---|---|---|---|
| Activation function | Accuracy (%) | Activation function | Accuracy (%) | Activation function | Accuracy (%) |
| RelU | 96.5 | Sigmoid | 94.36 | Sigmoid | 95.6 |
| Approximation ReLU 1 | 93.49 | Approximation Sigmoid 1 | 89.26 | Approximation Sigmoid 1 | 92.8 |
| Approximation ReLU 2 | 52.87 | Approximation Sigmoid 2 | 91.43 | Approximation Sigmoid 2 | 92.6 |
| - | - | Approximation Sigmoid 3 | 87.57 | Approximation Sigmoid 3 | 93.03 |

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein solve the problems related to privacy of the users in the existing methods for malicious URL detection. The disclosure provides a method and system for classifying a website URL.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computers like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer-readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method for classifying a website uniform resource locator, URL, the method comprising:
providing (202), the website URL as an input URL to a client machine (102) via an input module (106), wherein the input URL is kept at a predefined character length;
extracting (204), by the client machine (102) via one or more first hardware processors (108), a feature vector out of the input URL using a deep neural network, DNN, based technique, comprising:
dividing (302), by the client machine (102) via the one or more first hardware processors (108), the input URL based on characters or based on words through tokenization, wherein the division results in the generation of a character level URL and a word level URL;
embedding (304), by the client machine (102) via the one or more first hardware processors (108), the character level URL and the word level URL;
changing (306), by the client machine (102) via the one or more first hardware processors (108), the character level URL and the word level URL into a matrix URL format using an embedding matrix, wherein the matrix URL comprising feature vectors representative of the input URL;
applying (308), by the client machine (102) via the one or more first hardware processors (108), convolution layer with max pooling to the matrix URL to detect semantic and sequential patterns on characters and words in the form of feature vectors, wherein the max pooling is a sample-based discretization process; and
concatenating (310), by the client machine (102) via the one or more first hardware processors (108), the feature vectors detected from the words and characters to generate a resultant feature vector for the classification of the website URL;
encrypting (206), by the client machine (102) via the one or more first hardware processors (108), the resultant feature vector using a fully homomorphic encryption, FHE, method, wherein the encryption results in generation of a representative encrypted feature vector of the input URL;
sending (208), by the client machine (102) via the one or more first hardware processors (108), the representative encrypted feature vector of the input URL to a server (104);
computing (210), by the server (104) via one or more second hardware processors (108), encrypted intermediate computation results by applying a logistic regression LR based technique on the representative encrypted feature vector using polynomial approximation of an activation function, wherein the LR based technique comprises:
classifying, by the server (104) via the one or more second hardware processors (108), the website URL using a trained LR based classifier on the representative encrypted feature vector;
sending (212), by the server (104) via the one or more second hardware processors (108), the encrypted intermediate computation results to the client machine (102);
decrypting (214), by the client machine (102) via the one or more first hardware processors (108), the encrypted intermediate computation results using the FHE method; and
classifying (216), by the client machine (102) via the one or more first hardware processors (108), the input URL as one of malicious or benign based on the decrypted intermediate computation results.

2. The method according to claim 1, wherein the activation function is at least one of Tanh, ReLU, leaky ReLU and Softmax function.

3. The method according to claim 1, wherein the classification of the website URL is split into the client machine (102) and the server (104) for preserving privacy of the classification.

4. The method according to claim 1, wherein the FHE is performed using at least one of an addition or a multiplication.

5. A system (100) for classifying a website uniform resource locator, URL, the system (100) comprises:
an input module (106) for providing the website URL as an input URL to a client machine (102), wherein the input URL is kept at a predefined character length; and
a server (104) and the client machine (102) in communication with each other, wherein the server and the client machine (102) further comprises:
one or more hardware processors (108); and
a memory (110) in communication with the one or more hardware processors (108), wherein the memory (110) is configured to store a plurality of instructions, which when executed perform the steps of:
extracting, by the client machine (102) via the one or more first hardware processors (108), a feature vector out of the input URL using
a deep neural network, DNN, based technique, comprising:
dividing, by the client machine (102) via the one or more first hardware processors (108), the input URL based on characters or based on words through tokenization, wherein the division results in the generation of a character level URL and a word level URL;
embedding, by the client machine (102) via the one or more first hardware processors (108), the character level URL and the word level URL;
changing, by the client machine (102) via the one or more first hardware processors (108), the character level URL and the word level URL into a matrix URL format using an embedding matrix, wherein the matrix URL comprising feature vectors representative of the input URL;
applying, by the client machine (102) via the one or more first hardware processors (108), convolution layer with max pooling to the matrix URL to detect semantic and sequential patterns on characters and words in the form of feature vectors, wherein the max pooling is a sample-based discretization process; and
concatenating, by the client machine (102) via the one or more first
hardware processors (108), the feature vectors detected from the words and characters to generate a resultant feature vector for the classification of the website URL;
encrypting, by the client machine (102) via the one or more first hardware processors (108), the resultant feature vector using a fully homomorphic encryption, FHE, method, wherein the encryption results in generation of a representative encrypted feature vector of the input URL;
sending, by the client machine (102) via the one or more first hardware processors (108), the representative encrypted feature vector of the input URL to the server (104);
computing, by the server (104) via one or more second hardware processors (108), encrypted intermediate computation results by applying a LR based technique on the representative encrypted feature vector using polynomial approximation of an activation function, wherein the LR based technique comprises:
classifying, by the server (104) via the one or more second hardware processors (108), the website URL using a trained LR based classifier on the representative encrypted feature vector;
sending, by the server (104) via the one or more second hardware processors (108), the encrypted intermediate computation results to the client machine (102);
decrypting, by the client machine (102) via the one or more first hardware processors (108), the encrypted intermediate computation results using the FHE method; and
classifying, by the client machine (102) via the one or more first hardware processors (108), the input URL as one of malicious or benign based on the decrypted intermediate computation results.

6. One or more non-transitory machine readable information storage mediums comprising one or more instructions which when executed by one or more hardware processors cause classifying a website uniform resource locator, URL, the instructions cause:
providing the website URL as an input URL to a client machine (102) via an input module (106), wherein the input URL is kept at a predefined character length;
extracting, by the client machine (102) via one or more first hardware processors (108), a feature vector out of the input URL using a deep neural network, DNN, based technique, comprising:
dividing, by the client machine (102) via the one or more first hardware processors (108), the input URL based on characters or based on words through tokenization, wherein the division results in the generation of a character level URL and a word level URL;
embedding, by the client machine (102) via the one or more first hardware processors (108), the character level URL and the word level URL;
changing, by the client machine (102) via the one or more first hardware processors (108), the character level URL and the word level URL into a matrix URL format using an embedding matrix, wherein the matrix URL comprising feature vectors representative of the input URL; and
applying, by the client machine (102) via the one or more first hardware processors (108), convolution layer with max pooling to the matrix URL to detect semantic and sequential patterns on characters and words in the form of feature vectors, wherein the max pooling is a sample-based discretization process; and
concatenating, by the client machine (102) via the one or more first hardware processors (108), the feature vectors detected from the words and characters to generate a resultant feature vector for the classification of the website URL;
encrypting, by the client machine (102) via the one or more first hardware processors (108), the resultant feature vector using a fully homomorphic encryption, FHE, method, wherein the encryption results in generation of a representative encrypted feature vector of the input URL;
sending, by the client machine (102) via the one or more first hardware processors (108), the representative encrypted feature vector of the input URL to a server (104);
computing, by the server (104) via one or more second hardware processors (108), encrypted intermediate computation results by applying a LR based technique on the representative encrypted feature vector using polynomial approximation of an activation function, wherein the LR based technique comprises:
classifying, by the server (104) via the one or more second hardware processors (108), the website URL using a trained LR based classifier on the representative encrypted feature vector;
sending, by the server (104) via the one or more second hardware processors (108), the encrypted intermediate computation results to the client machine (102);
decrypting, by the client machine (102) via the one or more first hardware processors (108), the encrypted intermediate computation results using the FHE method; and
classifying, by the client machine (102) via the one or more first hardware processors (108), the input URL as one of malicious or benign based on the decrypted intermediate computation results.

## Patentansprüche

1. Prozessorimplementiertes Verfahren zum Klassifizieren eines Uniform Resource Locator, URL, einer Website, wobei das Verfahren Folgendes umfasst:
Bereitstellen (202) des Website-URL als einen Eingabe-URL für eine Client-Maschine (102) über ein Eingabemodul (106), wobei der Eingabe-URL auf einer vordefinierten Zeichenlänge gehalten wird;
Extrahieren (204), durch die Client-Maschine (102) über einen oder mehrere erste Hardwareprozessoren (108), eines Merkmalsvektors aus dem Eingabe-URL unter Verwendung
einer Deep Neural Network, DNN, basierten Technik, umfassend:
Teilen (302), durch die Client-Maschine (102) über den einen oder die mehreren ersten Hardwareprozessoren (108), des Eingabe-URL basierend auf Zeichen oder basierend auf Wörtern durch Tokenisierung, wobei die Teilung zur Erzeugung eines URL auf Zeichenebene und eines URL auf Wortebene führt;
Einbetten (304), durch die Client-Maschine (102) über den einen oder die mehreren ersten Hardwareprozessoren (108), des URL auf Zeichenebene und des URL auf Wortebene;
Ändern (306), durch die Client-Maschine (102) über den einen oder die mehreren ersten Hardwareprozessoren (108), des URL auf Zeichenebene und des URL auf Wortebene in ein Matrix-URL-Format unter Verwendung einer Einbettungsmatrix, wobei der Matrix-URL Merkmalsvektoren umfasst, die für den Eingabe-URL repräsentativ sind;
Anwenden (308), durch die Client-Maschine (102) über den einen oder die mehreren ersten Hardwareprozessoren (108), einer Faltungsschicht mit max-Pooling auf den Matrix-URL, um semantische und sequenzielle Muster auf Zeichen und Wörtern in Form von Merkmalsvektoren zu erkennen, wobei das max-Pooling ein stichprobenbasierter Diskretisierungsprozess ist; und
Verketten (310), durch die Client-Maschine (102) über den einen oder die mehreren ersten Hardwareprozessoren (108), der aus den Wörtern und Zeichen erkannten Merkmalsvektoren, um einen resultierenden Merkmalsvektor für die Klassifizierung des Website-URL zu erzeugen;
Verschlüsseln (206), durch die Client-Maschine (102) über den einen oder die mehreren ersten Hardwareprozessoren (108), des resultierenden Merkmalsvektors unter Verwendung eines vollständig homomorphen Verschlüsselungs-, FHE-, Verfahrens, wobei die Verschlüsselung zur Erzeugung eines repräsentativen verschlüsselten Merkmalsvektors des Eingabe-URL führt;
Senden (208), durch die Client-Maschine (102) über den einen oder die mehreren ersten Hardwareprozessoren (108), des repräsentativen verschlüsselten Merkmalsvektors des Eingabe-URL an einen Server (104);
Berechnen (210), durch den Server (104) über einen oder mehrere zweite Hardwareprozessoren (108), von verschlüsselten Zwischenberechnungsergebnissen durch Anwenden einer auf logistischer Regression, LR, basierenden Technik auf den repräsentativen verschlüsselten Merkmalsvektor unter Verwendung einer polynomiellen Approximation einer Aktivierungsfunktion, wobei die LR-basierte Technik Folgendes umfasst:
Klassifizieren, durch den Server (104) über den einen oder die mehreren zweiten Hardwareprozessoren (108), des Website-URL unter Verwendung eines trainierten LR-basierten Klassifizierers auf dem repräsentativen verschlüsselten Merkmalsvektor;
Senden (212), durch den Server (104) über den einen oder die mehreren zweiten Hardwareprozessoren (108), der verschlüsselten Zwischenberechnungsergebnisse an die Client-Maschine (102);
Entschlüsseln (214), durch die Client-Maschine (102) über den einen oder die mehreren ersten Hardwareprozessoren (108), der verschlüsselten Zwischenberechnungsergebnisse unter Verwendung des FHE-Verfahrens; und
Klassifizieren (216), durch die Client-Maschine (102) über den einen oder die mehreren ersten Hardwareprozessoren (108), des Eingabe-URL als eines von bösartig oder gutartig basierend auf den entschlüsselten Zwischenberechnungsergebnissen.

2. Verfahren nach Anspruch 1, wobei die Aktivierungsfunktion mindestens eine von Tanh-, ReLU-, Leak-ReLU- und Softmax-Funktion ist.

3. Verfahren nach Anspruch 1, wobei die Klassifizierung des Website-URL in die Client-Maschine (102) und den Server (104) zum Bewahren der Privatsphäre der Klassifizierung aufgeteilt wird.

4. Verfahren nach Anspruch 1, wobei das FHE unter Verwendung von mindestens einem von einer Addition oder einer Multiplikation durchgeführt wird.

5. System (100) zum Klassifizieren eines Uniform Resource Locator, URL, einer Website, wobei das System (100) Folgendes umfasst:
ein Eingabemodul (106) zum Bereitstellen des Website-URL als einen Eingabe-URL für eine Client-Maschine (102), wobei der Eingabe-URL auf einer vordefinierten Zeichenlänge gehalten wird; und
einen Server (104) und die Client-Maschine (102) in Kommunikation miteinander, wobei der Server und die Client-Maschine (102) ferner Folgendes umfassen:
einen oder mehrere Hardwareprozessoren (108); und
einen Speicher (110) in Kommunikation mit dem einen oder den mehreren Hardwareprozessoren (108), wobei der Speicher (110) konfiguriert ist, um eine Mehrzahl von Anweisungen zu speichern, die bei Ausführung die folgenden Schritte durchführen:
Extrahieren, durch die Client-Maschine (102) über den einen oder die mehreren ersten Hardwareprozessoren (108), eines Merkmalsvektors aus dem Eingabe-URL unter Verwendung
einer Deep Neural Network, DNN, basierten Technik, umfassend:
Teilen, durch die Client-Maschine (102) über den einen oder die mehreren ersten Hardwareprozessoren (108), des Eingabe-URL basierend auf Zeichen oder basierend auf Wörtern durch Tokenisierung, wobei die Teilung zur Erzeugung eines URL auf Zeichenebene und eines URL auf Wortebene führt;
Einbetten, durch die Client-Maschine (102) über den einen oder die mehreren ersten Hardwareprozessoren (108), des URL auf Zeichenebene und des URL auf Wortebene;
Ändern, durch die Client-Maschine (102) über den einen oder die mehreren ersten Hardwareprozessoren (108), des URL auf Zeichenebene und des URL auf Wortebene in ein Matrix-URL-Format unter Verwendung einer Einbettungsmatrix, wobei der Matrix-URL Merkmalsvektoren umfasst, die für den Eingabe-URL repräsentativ sind;
Anwenden, durch die Client-Maschine (102) über den einen oder die mehreren ersten Hardwareprozessoren (108), einer Faltungsschicht mit max-Pooling auf den Matrix-URL, um semantische und sequenzielle Muster auf Zeichen und Wörtern in Form von Merkmalsvektoren zu erkennen, wobei das max-Pooling ein stichprobenbasierter Diskretisierungsprozess ist; und
Verketten, durch die Client-Maschine (102) über den einen oder die mehreren ersten Hardwareprozessoren (108), der aus den Wörtern und Zeichen erkannten Merkmalsvektoren, um einen resultierenden Merkmalsvektor für die Klassifizierung des Website-URL zu erzeugen;
Verschlüsseln, durch die Client-Maschine (102) über den einen oder die mehreren ersten Hardwareprozessoren (108), des resultierenden Merkmalsvektors unter Verwendung eines vollständig homomorphen Verschlüsselungs-, FHE-, Verfahrens, wobei die Verschlüsselung zur Erzeugung eines repräsentativen verschlüsselten Merkmalsvektors des Eingabe-URL führt;
Senden, durch die Client-Maschine (102) über den einen oder die mehreren ersten Hardwareprozessoren (108), des repräsentativen verschlüsselten Merkmalsvektors des Eingabe-URL an den Server (104);
Berechnen, durch den Server (104) über einen oder mehrere zweite Hardwareprozessoren (108), von verschlüsselten Zwischenberechnungsergebnissen durch Anwenden einer auf LR basierenden Technik auf den repräsentativen verschlüsselten Merkmalsvektor unter Verwendung einer polynomiellen Approximation einer Aktivierungsfunktion, wobei die LR-basierte Technik Folgendes umfasst:
Klassifizieren, durch den Server (104) über den einen oder die mehreren zweiten Hardwareprozessoren (108), des Website-URL unter Verwendung eines trainierten LR-basierten Klassifizierers auf dem repräsentativen verschlüsselten Merkmalsvektor;
Senden, durch den Server (104) über den einen oder die mehreren zweiten Hardwareprozessoren (108), der verschlüsselten Zwischenberechnungsergebnisse an die Client-Maschine (102);
Entschlüsseln, durch die Client-Maschine (102) über den einen oder die mehreren ersten Hardwareprozessoren (108), der verschlüsselten Zwischenberechnungsergebnisse unter Verwendung des FHE-Verfahrens; und
Klassifizieren, durch die Client-Maschine (102) über den einen oder die mehreren ersten Hardwareprozessoren (108), des Eingabe-URL als eines von bösartig oder gutartig basierend auf den entschlüsselten Zwischenberechnungsergebnissen.

6. Ein oder mehrere nichtflüchtige maschinenlesbare Informationsspeichermedien, die eine oder mehrere Anweisungen umfassen, die bei Ausführung durch einen oder mehrere Hardwareprozessoren das Klassifizieren eines Uniform Resource Locator, URL, einer Website bewirken, wobei die Anweisungen Folgendes bewirken:
Bereitstellen des Website-URL als einen Eingabe-URL für eine Client-Maschine (102) über ein Eingabemodul (106), wobei der Eingabe-URL auf einer vordefinierten Zeichenlänge gehalten wird;
Extrahieren, durch die Client-Maschine (102) über einen oder mehrere erste Hardwareprozessoren (108), eines Merkmalsvektors aus dem Eingabe-URL unter Verwendung
einer Deep Neural Network, DNN, basierten Technik, umfassend:
Teilen, durch die Client-Maschine (102) über den einen oder die mehreren ersten Hardwareprozessoren (108), des Eingabe-URL basierend auf Zeichen oder basierend auf Wörtern durch Tokenisierung, wobei die Teilung zur Erzeugung eines URL auf Zeichenebene und eines URL auf Wortebene führt;
Einbetten, durch die Client-Maschine (102) über den einen oder die mehreren ersten Hardwareprozessoren (108), des URL auf Zeichenebene und des URL auf Wortebene;
Ändern, durch die Client-Maschine (102) über den einen oder die mehreren ersten Hardwareprozessoren (108), des URL auf Zeichenebene und des URL auf Wortebene in ein Matrix-URL-Format unter Verwendung einer Einbettungsmatrix, wobei der Matrix-URL Merkmalsvektoren umfasst, die für den Eingabe-URL repräsentativ sind; und
Anwenden, durch die Client-Maschine (102) über den einen oder die mehreren ersten Hardwareprozessoren (108), einer Faltungsschicht mit max-Pooling auf den Matrix-URL, um semantische und sequenzielle Muster auf Zeichen und Wörtern in Form von Merkmalsvektoren zu erkennen, wobei das max-Pooling ein stichprobenbasierter Diskretisierungsprozess ist; und
Verketten, durch die Client-Maschine (102) über den einen oder die mehreren ersten Hardwareprozessoren (108), der aus den Wörtern und Zeichen erkannten Merkmalsvektoren, um einen resultierenden Merkmalsvektor für die Klassifizierung des Website-URL zu erzeugen;
Verschlüsseln, durch die Client-Maschine (102) über den einen oder die mehreren ersten Hardwareprozessoren (108), des resultierenden Merkmalsvektors unter Verwendung eines vollständig homomorphen Verschlüsselungs-, FHE-, Verfahrens, wobei die Verschlüsselung zur Erzeugung eines repräsentativen verschlüsselten Merkmalsvektors des Eingabe-URL führt;
Senden, durch die Client-Maschine (102) über den einen oder die mehreren ersten Hardwareprozessoren (108), des repräsentativen verschlüsselten Merkmalsvektors des Eingabe-URL an einen Server (104);
Berechnen, durch den Server (104) über einen oder mehrere zweite Hardwareprozessoren (108), von verschlüsselten Zwischenberechnungsergebnissen durch Anwenden einer auf LR basierenden Technik auf den repräsentativen verschlüsselten Merkmalsvektor unter Verwendung einer polynomiellen Approximation einer Aktivierungsfunktion, wobei die LR-basierte Technik Folgendes umfasst:
Klassifizieren, durch den Server (104) über den einen oder die mehreren zweiten Hardwareprozessoren (108), des Website-URL unter Verwendung eines trainierten LR-basierten Klassifizierers auf dem repräsentativen verschlüsselten Merkmalsvektor;
Senden, durch den Server (104) über den einen oder die mehreren zweiten Hardwareprozessoren (108), der verschlüsselten Zwischenberechnungsergebnisse an die Client-Maschine (102);
Entschlüsseln, durch die Client-Maschine (102) über den einen oder die mehreren ersten Hardwareprozessoren (108), der verschlüsselten Zwischenberechnungsergebnisse unter Verwendung des FHE-Verfahrens; und
Klassifizieren, durch die Client-Maschine (102) über den einen oder die mehreren ersten Hardwareprozessoren (108), des Eingabe-URL als eines von bösartig oder gutartig basierend auf den entschlüsselten Zwischenberechnungsergebnissen.

## Revendications

1. Procédé mis en œuvre par processeur pour classer un localisateur uniforme de ressources, URL, de site web, le procédé comprenant :
la fourniture (202) de l'URL de site web en tant qu'URL d'entrée à une machine client (102) via un module d'entrée (106), dans lequel l'URL d'entrée est maintenue à une longueur de caractère prédéfinie ;
l'extraction (204), par la machine client (102) via un ou plusieurs premiers processeurs matériels (108), d'un vecteur de caractéristiques à partir de l'URL d'entrée en utilisant
une technique basée sur un réseau neuronal profond, DNN, comprenant :
la division (302), par la machine client (102) via les un ou plusieurs premiers processeurs matériels (108), de l'URL d'entrée sur la base de caractères ou sur la base de mots par une jetonisation, dans lequel la division aboutit à la génération d'une URL de niveau de caractère et d'une URL de niveau de mot ;
le plongement (304), par la machine client (102) via les un ou plusieurs premiers processeurs matériels (108), de l'URL de niveau de caractère et de l'URL de niveau de mot ;
le changement (306), par la machine client (102) via les un ou plusieurs premiers processeurs matériels (108), de l'URL de niveau de caractère et de l'URL de niveau de mot en un format d'URL de matrice en utilisant une matrice de plongement, dans lequel l'URL de matrice comprend des vecteurs de caractéristiques représentatifs de l'URL d'entrée ;
l'application (308), par la machine client (102) via les un ou plusieurs premiers processeurs matériels (108), d'une couche de convolution avec un regroupement maximal à l'URL de matrice pour détecter des motifs sémantiques et séquentiels sur des caractères et des mots sous la forme de vecteurs de caractéristiques, dans lequel le regroupement maximal est un processus de discrétisation basé sur un échantillon ; et
la concaténation (310), par la machine client (102) via les un ou plusieurs premiers processeurs matériels (108), des vecteurs de caractéristiques détectés à partir des mots et des caractères pour générer un vecteur de caractéristiques résultant pour la classification de l'URL de site web ;
le chiffrement (206), par la machine client (102) via les un ou plusieurs premiers processeurs matériels (108), du vecteur de caractéristiques résultant en utilisant un procédé de chiffrement entièrement homomorphe, FHE, dans lequel le chiffrement aboutit à la génération d'un vecteur de caractéristiques chiffré représentatif de l'URL d'entrée ;
l'envoi (208), par la machine client (102) via les un ou plusieurs premiers processeurs matériels (108), du vecteur de caractéristiques chiffré représentatif de l'URL d'entrée à un serveur (104) ;
le calcul (210), par le serveur (104) via un ou plusieurs seconds processeurs matériels (108), de résultats de calcul intermédiaires chiffrés en appliquant une technique basée sur une régression logistique, LR, sur le vecteur de caractéristiques chiffré représentatif en utilisant une approximation polynomiale d'une fonction d'activation, dans lequel la technique basée sur une LR comprend :
la classification, par le serveur (104) via les un ou plusieurs seconds processeurs matériels (108), de l'URL de site web en utilisant un classificateur basé sur une LR entraîné sur le vecteur de caractéristiques chiffré représentatif ;
l'envoi (212), par le serveur (104) via les un ou plusieurs seconds processeurs matériels (108), des résultats de calcul intermédiaires chiffrés à la machine client (102) ;
le déchiffrement (214), par la machine client (102) via les un ou plusieurs premiers processeurs matériels (108), des résultats de calcul intermédiaires chiffrés en utilisant le procédé FHE ; et
la classification (216), par la machine client (102) via les un ou plusieurs premiers processeurs matériels (108), de l'URL d'entrée comme étant l'un parmi malveillant ou légitime sur la base des résultats de calcul intermédiaires déchiffrés.

2. Procédé selon la revendication 1, dans lequel la fonction d'activation est au moins l'une parmi Tanh, ReLU, Leaky ReLU et une fonction Softmax.

3. Procédé selon la revendication 1, dans lequel la classification de l'URL de site web est divisée en la machine client (102) et le serveur (104) pour préserver la confidentialité de la classification.

4. Procédé selon la revendication 1, dans lequel le FHE est effectué en utilisant au moins l'une parmi une addition ou une multiplication.

5. Système (100) pour classer un localisateur uniforme de ressources, URL, de site web, le système (100) comprend :
un module d'entrée (106) pour fournir l'URL de site web en tant qu'URL d'entrée à une machine client (102), dans lequel l'URL d'entrée est maintenue à une longueur de caractère prédéfinie ; et
un serveur (104) et la machine client (102) en communication l'un avec l'autre, dans lequel le serveur et la machine client (102) comprennent en outre :
un ou plusieurs processeurs matériels (108) ; et
une mémoire (110) en communication avec les un ou plusieurs processeurs matériels (108), dans lequel la mémoire (110) est configurée pour stocker une pluralité d'instructions qui, lorsqu'elles sont exécutées, effectuent les étapes de :
extraction, par la machine client (102) via les un ou plusieurs premiers processeurs matériels (108), d'un vecteur de caractéristiques à partir de l'URL d'entrée en utilisant
une technique basée sur un réseau neuronal profond, DNN, comprenant :
la division, par la machine client (102) via les un ou plusieurs premiers processeurs matériels (108), de l'URL d'entrée sur la base de caractères ou sur la base de mots par une jetonisation, dans lequel la division aboutit à la génération d'une URL de niveau de caractère et d'une URL de niveau de mot ;
le plongement, par la machine client (102) via les un ou plusieurs premiers processeurs matériels (108), de l'URL de niveau de caractère et de l'URL de niveau de mot ;
le changement, par la machine client (102) via les un ou plusieurs premiers processeurs matériels (108), de l'URL de niveau de caractère et de l'URL de niveau de mot en un format d'URL de matrice en utilisant une matrice de plongement, dans lequel l'URL de matrice comprend des vecteurs de caractéristiques représentatifs de l'URL d'entrée ;
l'application, par la machine client (102) via les un ou plusieurs premiers processeurs matériels (108), d'une couche de convolution avec un regroupement maximal à l'URL de matrice pour détecter des motifs sémantiques et séquentiels sur des caractères et des mots sous la forme de vecteurs de caractéristiques, dans lequel le regroupement maximal est un processus de discrétisation basé sur un échantillon ; et
la concaténation, par la machine client (102) via les un ou plusieurs premiers processeurs matériels (108), des vecteurs de caractéristiques détectés à partir des mots et des caractères pour générer un vecteur de caractéristiques résultant pour la classification de l'URL de site web ;
le chiffrement, par la machine client (102) via les un ou plusieurs premiers processeurs matériels (108), du vecteur de caractéristiques résultant en utilisant un procédé de chiffrement entièrement homomorphe, FHE, dans lequel le chiffrement aboutit à la génération d'un vecteur de caractéristiques chiffré représentatif de l'URL d'entrée ;
l'envoi, par la machine client (102) via les un ou plusieurs premiers processeurs matériels (108), du vecteur de caractéristiques chiffré représentatif de l'URL d'entrée au serveur (104) ;
le calcul, par le serveur (104) via un ou plusieurs seconds processeurs matériels (108), de résultats de calcul intermédiaires chiffrés en appliquant une technique basée sur une LR sur le vecteur de caractéristiques chiffré représentatif en utilisant une approximation polynomiale d'une fonction d'activation, dans lequel la technique basée sur une LR comprend :
la classification, par le serveur (104) via les un ou plusieurs seconds processeurs matériels (108), de l'URL de site web en utilisant un classificateur basé sur une LR entraîné sur le vecteur de caractéristiques chiffré représentatif ;
l'envoi, par le serveur (104) via les un ou plusieurs seconds processeurs matériels (108), des résultats de calcul intermédiaires chiffrés à la machine client (102) ;
le déchiffrement, par la machine client (102) via les un ou plusieurs premiers processeurs matériels (108), des résultats de calcul intermédiaires chiffrés en utilisant le procédé FHE ; et
la classification, par la machine client (102) via les un ou plusieurs premiers processeurs matériels (108), de l'URL d'entrée comme étant l'un parmi malveillant ou légitime sur la base des résultats de calcul intermédiaires déchiffrés.

6. Un ou plusieurs supports de stockage d'informations lisibles par machine non transitoires comprenant une ou plusieurs instructions qui, lorsqu'elles sont exécutées par un ou plusieurs processeurs matériels, amènent la classification d'un localisateur uniforme de ressources, URL, de site web, les instructions amènent :
la fourniture de l'URL de site web en tant qu'URL d'entrée à une machine client (102) via un module d'entrée (106), dans lequel l'URL d'entrée est maintenue à une longueur de caractère prédéfinie ;
l'extraction, par la machine client (102) via un ou plusieurs premiers processeurs matériels (108), d'un vecteur de caractéristiques à partir de l'URL d'entrée en utilisant
une technique basée sur un réseau neuronal profond, DNN, comprenant :
la division, par la machine client (102) via les un ou plusieurs premiers processeurs matériels (108), de l'URL d'entrée sur la base de caractères ou sur la base de mots par une jetonisation, dans lequel la division aboutit à la génération d'une URL de niveau de caractère et d'une URL de niveau de mot ;
le plongement, par la machine client (102) via les un ou plusieurs premiers processeurs matériels (108), de l'URL de niveau de caractère et de l'URL de niveau de mot ;
le changement, par la machine client (102) via les un ou plusieurs premiers processeurs matériels (108), de l'URL de niveau de caractère et de l'URL de niveau de mot en un format d'URL de matrice en utilisant une matrice de plongement, dans lequel l'URL de matrice comprend des vecteurs de caractéristiques représentatifs de l'URL d'entrée ; et
l'application, par la machine client (102) via les un ou plusieurs premiers processeurs matériels (108), d'une couche de convolution avec un regroupement maximal à l'URL de matrice pour détecter des motifs sémantiques et séquentiels sur des caractères et des mots sous la forme de vecteurs de caractéristiques, dans lequel le regroupement maximal est un processus de discrétisation basé sur un échantillon ; et
la concaténation, par la machine client (102) via les un ou plusieurs premiers processeurs matériels (108), des vecteurs de caractéristiques détectés à partir des mots et des caractères pour générer un vecteur de caractéristiques résultant pour la classification de l'URL de site web ;
le chiffrement, par la machine client (102) via les un ou plusieurs premiers processeurs matériels (108), du vecteur de caractéristiques résultant en utilisant un procédé de chiffrement entièrement homomorphe, FHE, dans lequel le chiffrement aboutit à la génération d'un vecteur de caractéristiques chiffré représentatif de l'URL d'entrée ;
l'envoi, par la machine client (102) via les un ou plusieurs premiers processeurs matériels (108), du vecteur de caractéristiques chiffré représentatif de l'URL d'entrée à un serveur (104) ;
le calcul, par le serveur (104) via un ou plusieurs seconds processeurs matériels (108), de résultats de calcul intermédiaires chiffrés en appliquant une technique basée sur une LR sur le vecteur de caractéristiques chiffré représentatif en utilisant une approximation polynomiale d'une fonction d'activation, dans lequel la technique basée sur une LR comprend :
la classification, par le serveur (104) via les un ou plusieurs processeurs matériels (108), de l'URL de site web en utilisant le classificateur basé sur une LR sur le FHE ;
l'envoi, par le serveur (104) via les un ou plusieurs seconds processeurs matériels (108), des résultats de calcul intermédiaires chiffrés à la machine client (102) ;
le déchiffrement, par la machine client (102) via les un ou plusieurs premiers processeurs matériels (108), des résultats de calcul intermédiaires chiffrés en utilisant le procédé FHE ; et
la classification, par la machine client (102) via les un ou plusieurs premiers processeurs matériels (108), de l'URL d'entrée comme étant l'un parmi malveillant ou légitime sur la base des résultats de calcul intermédiaires déchiffrés.
